# EUROPEAN PATENT SPECIFICATION

(11) **EP 2 141 489 B1**
(45) Date of publication and mention of the grant of the patent: **26.10.2011**
(21) Application number: 09008556.4
(22) Date of filing: 30.06.2009
(51) Int. Cl.: G01N 25/72

(54) **Thermographic inspection apparatus**
Thermografische Prüfvorrichtung
Appareil d'essai thermographique

(30) Priority: 30.06.2008 EP 08011811
(43) Date of publication of application: 06.01.2010
(73) Proprietor: Montanuniversität Leoben, 8700 Leoben (AT)
(72) Inventor: Oswald-Tranta, Beate, 8700 Leoben (AT); O'Leary, Paul, 8323 St. Marein bei Graz (AT); Wally, Gernot, 8793 Trofaiach (AT)
(74) Representative: Dilg, Haeusler, Schindelmann Patentanwaltsgesellschaft mbH

(56) References cited:
- WO-A1-2008/071204
- US-A- 5 719 395
- US-A- 6 122 045

## Description

### Field of the invention

The present invention relates to the field of analyzing an object with a longitudinal axis, especially for analyzing essentially elongate semi-finished products such as wires.

### Background of the invention

Elongate semi-finished products such as wires can be cut into small pieces which may then be processed by pressing or the like to manufacture members for automotive applications. Due to the mechanical stress exerted on such wires (or products manufactured from such wires) during normal use, it is important that these wires are nearly free of cracks and flaws. Very often they cannot be quality-assured by pure optical inspection.

Conventionally, surface defects of metallic semi-finished products such as wires are inspected by eddy current analysis systems. Transversal cracks are investigated with coils through which the wire is passed. The investigation of longitudinal cracks is done with rotating measurement heads. These sensors have to be rotated with high speed and accurate distance of about 0,5mm above the surface. But longitudinal cracks are not discoverable with high reliability.

Another method for the inspection of longitudinal posts is based on thermographic activation. The material to be inspected runs through an induction coil and is scanned with four high-speed IR cameras. Due to the high cost of such an apparatus it is mainly used for expensive semi-finished products with large diameters.

WO 2007/131257 discloses an apparatus for quality control. There is described an arrangement with a camera, whereby the camera and the detection position are arranged on a common central plane. On that side of the detection position which is remote from the camera, two lower mirror surfaces are arranged on both sides of the central plane, which mirror surfaces direct light emerging from the surface of the test object into the camera, and, on that side of the detection position which is near the camera, two upper mirror surfaces are arranged on both sides of the central plane, which mirror surfaces direct upper light emerging from the surface on the test object into the camera. This arrangement allows the inspection of an essentially cylindrical long object from all sides, namely 360°, with one camera.

US 6,122,045 discloses an inspection apparatus for generating a 360° view of a surface of a three-dimensional object, such as a wire or cable, and for inspecting the surface areas for flaws or imperfections. A receiving lens defines an optical axis extending through the object, and an origin located on the optical axis within the object and spaced a predetermined distance from the receiving lens, for generating a direct image of a front surface section of the object. A first mirror is spaced a first predetermined distance from the origin on another side of the object relative to the receiving lens for generating a first image of a first surface of the rear of the object. A second mirror is spaced a second predetermined distance from the origin on another side of the object relative to the receiving lens and on another side of the optical axis relative to the first mirror, for generating a second mirror image of a second rear surface section of the object. The first and the second images are each defined in a part by a first and second central ray, respectively, and each central ray forms an angle of incidence on the respective mirror. The first and the second predetermined distances and the angles of the incidence of the mirrors are each selected to simultaneously generate at least three spatial distinct images forming a 360° view of the surface area. It should be noted that the virtual objects seen in the upper and lower reflected rear views are, by geometrical optics, located farther from the eye or viewing camera lens than is the direct view of the target surface. Consequently, the images of the upper and the lower rear views formed on a camera CCD or on the eye's retina are smaller in all dimensions than the image of the direct view.

US 4,109,508 discloses a method for detecting surface defects or flaws of metallic material. The method comprises the steps of subjecting the surface of metallic material to high-frequency induction heated in a linear manner, transferring the heating portion of the surface layer of the metallic material, measuring the surface temperature of the metallic surface material after its being subjected to heating, and determining the depth of the surface defect or flaw on the basis of the level of value of temperature rise. A shortcoming of this method is that two expensive sensors or cameras are required each for investigating a corresponding side of the wire.

DE 196 23 121 discloses a device for and a method of photothermally examining surfaces of workpieces.

DE 195 42 534 discloses a device for producing and detecting induced heat radiation, in which movable mirror components are moved into and out of a crossed beam path across a stepping motor so as to be isogonal in the beam path. The stepping motor is controlled in such a manner that when the mirror components enter and leave the beam path, there is maximum speed. In another embodiment, a mirror component is pushed into and out of the beam path at a fixed angle of deviation. These embodiments ensure that there is a reduction in the test errors caused by only short-term, uneven illumination of an object, a detector being partial acting upon by heat radiation and by overlapping of the illumination and emission phase, and the collinearity of an ejected beam of a radiation source and of induced heat radiation is also ensured to achieve a measurement which is as independent of distance as possible.

US 2005/0169346 discloses a method for monitoring quality of a weld being formed between first and second pieces of material includes the steps of obtaining a thermal image of the weld being formed by collecting infrared radiation passing through the second piece of material, and analyzing the obtained thermal image for characteristics indicative of a properly formed weld.

US 5,803,606 discloses that in a device for photothermically testing a surface of a moving test specimen, an excitation beam may be applied to a test area. The excitation beam passes through an aperture in a collecting lens that reproduces the thermal radiation generated in a measuring area, so that the collecting lens may be adapted to a wavelength of the excitation beam passed to a detector. A coupling mirror mounted in the path of excitation beam has practically total reflectivity for the wavelength of the excitation beam and is arranged in such a way that it is very small near the focal area of the excitation beam, so that together with the aperture of the collecting lens it only masks a small part of the thermal radiation passed to the detector. In another embodiment, the excitation beam falls directly on the surface through an aperture in the decoupling mirror that deflects the thermal radiation, whereas the thermal radiation can be passed with practically all its intensity to the detector through the decoupling mirror with appropriate reflectivity.

WO 2008/071204 discloses an apparatus for analyzing an object, the analysis apparatus comprising a thermal analysis device adapted for analyzing a thermal distribution of the object in response to a thermal activation of the object, a geometrical measurement device adapted for analyzing the geometry of the object, and an evaluation unit adapted for performing a combined evaluation of information obtained from the thermal analysis device and from the geometrical measurement device.

JP 2000258584 discloses a site inspection device capable of measuring the temperature of an inspection object component with good accuracy regardless of the state of inspection object component and automating the inspection. A half mirror of an optical device transmits a part of light from an inspection object device and reflects the remaining light coming in the digital camera of an imaging device. The light reflected by the half mirror totally reflects at a total reflection mirror of the optical device and inputs in an infrared camera. Then, the digital camera photographs the outline shape of the inspection object and the infrared camera photographs the temperature distribution of the surface of the inspection object. The inspection processing device inspects abnormality of the inspection object based on the picture data of the inspection object component obtained with the digital camera.

JP 3185346 discloses a system for eliminating the movement of an image due to the field time of an infrared image sensor even when a material to be inspected is fed at high speed and for accurately performing the detection of a flaw and the measurement of the dimension thereof by vibrating the tracking mirror constituting the flaw detector so as to follow the moving speed of the object to be inspected. A sent material to be inspected is heated by the heater controlled by a heating controller and, when the surface of the material to be inspected has a flaw such as cracks or spills, heat is concentrated to the flaw. Next, the infrared radiation intensities of a normal part and the flaw part are detected by an infrared image sensor and a radiation sensitivity ratio is prepared by an image processing circuit and sent to a flaw judging circuit to judge the flaw. When the feed speed of the material to be inspected is markedly high in this constitution, the movement is generated in the image of the sensor. Therefore, a tracking mirror is vibrated corresponding to the speed of the material to be inspected so as to follow said speed and the relative speed with the material to be inspected is set to zero to eliminate the generation of movement.

JP 2278148 discloses to achieve a higher accuracy with a reduction in inspection time by a method wherein a plurality of soldered parts are heated continuously scanning an optical axis, then, a first measurement is performed continuously and subsequently, a second measurement continuously. A laser beam irradiated from a laser irradiating section passes through a shutter released for a fixed time with an irradiation control section, is transmitted through a dichroic mirror transmitting a wave length of the laser beam alone and scanned with a galvano mirror driven with an optical axis scan section to apply heat to a plurality of soldered parts as object to be inspected. Then, infrared rays radiated from the soldered parts heated are reflected with the mirrors and caught with an infrared sensor to measure a temperature with an infrared radiation thermometer. Here, the mirror is driven to scan the optical axis again so that temperatures of the soldered parts are measured several times each to store measured values thereof. A propriety judging section judges the propriety of the soldered parts based on data of a memory.

US 5719395 discloses a method employing a thermal gradient to detect cracks in a bridge structure. The thermal gradient is applied so heat flows from left to right through a region being examined for cracks. A first thermal image and a second image before and after thermal activation are compared.

WO 2008/071204 A1 discloses an apparatus for analyzing an object. The apparatus comprises a thermal analysis device adapted for analyzing a thermal distribution of the object in response to a thermal activation of the object.

### Summary of the Invention

It is an object of the invention to provide an apparatus for analyzing an object with a longitudinal axis with increased accuracy and reduced costs.

This object is solved by an apparatus and a method having the features according to the independent claims. Advantageous embodiments of the invention are described by the dependent claims.

According to an exemplary embodiment of the invention, an apparatus for analyzing an object with a longitudinal axis is provided which comprises a thermal activation unit adapted to thermally activate the object, an image acquisition unit having a depth of focus and being adapted to acquire a first image of the object before thermal activation, and to acquire a second image of the object after thermal activation. The first image (which may comprise multiple independently captured portions) of the object comprises a plurality of first image parts (which may be different circumferential surface sections of the object) and the second image (which may comprise multiple independently captured portions) of the object comprises a plurality of second image parts (which may be different circumferential surface sections of the object). In addition, a plurality of mirrors is arranged in an electromagnetic radiation path between the object and the image acquisition unit in such a manner that electromagnetic radiation path lengths assigned to different ones of the first image parts differ by not more than the depth of focus from one another and that electromagnetic radiation path lengths assigned to different ones of the second image parts differ by not more than the depth of focus from one another.

In the context of this application, the term "depth of focus" (or "depth of field") of an image acquisition unit may particularly denote is a portion of a scene that appears sharp in an image. Within the depth of focus, the unsharpness is imperceptible under normal viewing conditions. For instance, the depth of focus of an infrared camera implemented according to an exemplary embodiment may be less than 3 cm, particularly may be less than 1 cm. For the latter case, the electromagnetic radiation path lengths would differ by less than 3 cm, particularly by less than 1 cm.

The term "object" may particularly denote any physical structure (particularly any technical apparatus, member, or a portion thereof) in the real world which may be under development or production or machining. Examples of such a physical structure may be a member or tool such as a cast, forged, extruded or rolled component. "Objects" may be complete products or semifinished parts, members made of electrically conductive or electrically insulating material, carbon fiber members adhered to steel parts, etc. Such an object can be, for example, a metallic semi-finished product such as wires, billets or posts.

An advantage of such an arrangement is that circumferential image parts of the object can be considered equivalent regarding error analysis. Because the electromagnetic radiation path lengths are basically equivalent, the parts of the images have similar sizes and can be compared directly. Furthermore, image distortion in different parts of the images are believed to be not very different from one another, since the optical paths lengths-are not very different from one another. At the same time, this mirror arrangement makes it possible that only a single image acquisition unit such as a single infrared camera may be sufficient. Both the geometrical resolution and the error resolution of image portions captured to represent different circumferential surface sections of the object are directly comparable.

In another exemplary embodiment of the invention, the electromagnetic radiation path lengths assigned to different ones of the first image parts are equal in length, and the electromagnetic radiation path lengths assigned to different ones of the second image parts are equal in length. With this arrangement, the sharpness of the pictures is even more enhanced and even smaller cracks or flaws can be detected by comparing the first and the second image, making it possible to enhance the overall quality of the inspected or analyzed object.

In one embodiment, the inventive apparatus comprises an object moving unit adapted for moving the object relative to the plurality of mirrors and the image acquisition unit. In a typical arrangement, the plurality of mirrors and the image acquisition unit are building a recording unit that is stationary compared to a moving object. The object could for example be a long wire that should be inspected or analyzed. This wire is guided through the recording unit.

In this context, thermal activation may denote that the object, for instance a wire or another longitudinal object such as a post is passing a heating zone. The heating can be achieved by different methods. It can be an induction coil that is connected to an RF-generator. The object to be analyzed typically runs through this induction coil. Another method for thermal activation is the usage of one or more lasers emitting beams which are directed to the part of the object that should be thermally activated. Another method for thermal activation is the usage of a tungsten lamp.

In another advantageous embodiment, the apparatus comprises also a speed sensor to measure the speed of the object relative to the plurality of mirrors and the image acquisition unit. By using a speed sensor, it is possible to determine the time required to move a specific part of the object through the thermal activation zone. This allows the direct comparison of a specific part of the object before and after thermal activation. The speed sensor can be a speed wheel in contact with the moving object generating signals proportional to the speed of the object. Other speed sensor, especially those that do not make any mechanical contact between the sensor and the object, are also possible.

It may also be advantageous to orient reflection planes of the plurality of mirrors in parallel to the longitudinal axis of the object. This guarantees a low value of deformation of the reflected image to the image acquisition unit. Because the thermal activation unit is usually heating the object only by some degrees Celsius, the mirrors may advantageously be adapted to reflect infrared radiation. Other shapes of mirrors, especially curved mirrors that do not have a planar surface are possible.

The plurality of mirrors is arranged such that the first image (that is the image before the thermal activation) and the second image (that is the image after the thermal activation) include information indicative of a surface of the object along an entire circumference of the object (that is provide 360° information). If the object is for example a long wire, the longitudinal axis may be oriented in the motion direction of the wire. An entire circumference of the object would then mean that a complete 360° view around the object is reflected to the image acquisition unit via the plurality of mirrors. Because the number of mirrors in different electromagnetic radiation paths may differ, it might be required to electronically flip one or more image parts of the first and second image electronically/by image processing with the help of a control unit that is connected to the image acquisition unit. In other words, image processing may be performed by such a control unit (for instance a microprocessor or a central processing unit) to make individual image portions directly comparable or stitchable to one another.

The control unit is part of another advantageous embodiment of the current invention. It may be adapted for determining a technical quality of the object based on a correlation, particularly based on a difference between the first image and the second image. The control unit may be an electronic control unit connected to the image acquisition unit (or being part thereof) with elements of a computer such as a central processing unit, input/output devices and different kinds of memory, like i.e. a RAM, ROM, flash memory, and/or hard drives and a keyboard, a display for displaying images, image parts and other control information of the apparatus, like the speed of the object or temperature or other information of the thermal activation unit. The control unit can also influence the speed of the object relative to the recording unit. The control unit may also be adapted for graphical image processing. It can compare equivalent image components or image parts before and after a thermal activation of the object. In this context, calculating a difference may mean to compare the electromagnetic radiation intensity of the different image parts or from the complete, stitched together first and second image. With this, it may be possible to determine the quality of the object indicating one or more structural defects or imperfections of the object, particularly flaws or cracks.

In an embodiment, the image acquisition unit is an infrared camera. A sensitivity of such a camera for infrared radiation may be advantageous because the thermal activation unit is heating the object, for instance by some degrees Celsius. Heated portions of the object may be distinguishable from non-heated portions thereof on an image of an infrared camera. The infrared camera can also be built as a digital camera, which can be easily connected to the control unit. A person skilled in the art would know the different options of connecting a digital camera to a control unit. It should also be mentioned that the digital camera may have a two-dimensional sensor area.

In an embodiment, the inventive arrangement requires only exactly one infrared camera. Because an infrared camera is a high cost equipment (today about 50.000 to 70.000 Euros), a high-quality apparatus as described herewith can be built at lower costs if only one camera is sufficient. This may be achieved by the provision of the mirrors in a manner to project different object image parts onto the single camera. By adjusting optical path lengths to differ by less than a depth of field (DOF) of the infrared camera, image deteriorations when analyzing different image portions may be suppressed or eliminated.

The sensor region of the image acquisition unit, for instance an infrared digital camera, may be arranged in such a manner relative to the plurality of mirrors that the plurality of first image parts and the plurality of second image parts are projected simultaneously onto different portions of the sensor. The advantage of this arrangement is that it is possible to recognize different image parts by digital image processing of the same set of data. Because the optical paths are known it can easily be determined which image part has to be manipulated, for instance by flipping, in order to give all image part the same geometrical orientation.

It is possible for the control unit to stitch together image parts relating to different longitudinal portions of the object before thermal activation and after thermal activation. Thus, different longitudinal sections of the longitudinally moved object may be put together to reconstruct a longer longitudinal extension of the object. For example, different pieces of the wire can be captured sequentially in time and may be put together electronically. This may be done before and after a thermal activation so that comparable images before and after heating may be reconstructed. During this electronic reconstruction, artefacts resulting from a longitudinal temperature gradient due to thermal equilibration effects and due to different distances of sections of the object may be suppressed or eliminated.

According to a preferred embodiment, corresponding ones of the first and the second image portions (that is to say image portions before and after thermal activation relating to the same physical section of the object) may be captured by the image acquisition unit in such a manner that the lengths of assigned optical paths thereof are identical (or identical within experimental tolerances).

Thus, corresponding image portions before and after thermal activation may be directly comparable.

Thus, it may not be necessary that different circumferential portions of the object before thermal activation are stitched together electronically. It may be possible that different longitudinal portions of the object before thermal activation are stitched together electronically. It may not be necessary that different circumferential portions of the object after thermal activation are stitched together electronically. It may be possible that different longitudinal portions of the object after thermal activation are stitched together electronically.

The apparatus as described here can be advantageously built with at least five mirrors, particularly exactly five mirrors, per first and second image. In other words, five mirrors may be used for imaging the object before heating, and five other mirrors may be used for imaging the object after heating. With five mirrors, three sides of the object, each representing about 120° of a circumference can be projected onto the image acquisition unit. In two of the electromagnetic radiation paths two mirrors each are implemented. For the third part image of the first or the second image, it is possible to implement only one mirror to project about 120° of the circumference of the object onto the image acquisition unit. This also means that the image part of the first or the second image with only one mirror in the electromagnetic radiation path may be right-left reversed. Thus, this image part may require to be flipped up and down in order to get the same orientation as those image parts which relate to electromagnetic radiation paths in which a beam (for instance comprising infrared light) has been reflected by two mirrors.

In yet another embodiment, the apparatus is adapted to recognize the object in the image parts and flip them electronically, if required, each into a horizontal orientation. In an arrangement with five mirrors, one of the part images is reflected only by one mirror before being received by the image acquisition unit. The other two part images are reflected sequentially by two mirrors before impinging onto the image acquisition unit. A reflection may involve a right-left conversion. So, one of the three image parts in case of five mirrors is right-left reversed and need to be flipped up and down in order to give the image parts the same orientation before stitching them together.

In another embodiment, the apparatus is adapted to eliminate a temperature gradient in the first and second image to and from the thermal activation unit. Such a compensation may be advantageous because the thermal activation zone may generate a temperature gradient within the object. A zone of the object, for instance the wire, before the thermal activation zone and after the thermal activation zone (if the object and the thermal activation zone are in relative movement to each other) will be the warmer the closer the zone of the object is to the thermal activation zone. This may result in a spatial dependence of the brightness of the first and the second image or multiple images stitched together in a longitudinal direction. Therefore, by eliminating the temperature gradient of a complete segment of the object, an equal background temperature of the object can be simulated. The temperature of an object would be higher after thermal activation compared to the temperature before thermal activation. If the temperature gradient has been eliminated a comparison of the same segment of the wire before and after the thermal activation can be achieved without the danger of temperature artefacts.

According to another aspect of the invention a method of analyzing an object is disclosed. The method comprises thermally activating the object, acquiring a first image of the object before thermal activation, and acquiring a second image of the object after thermal activation using an image acquisition unit having a predetermined depth of focus. The first image of the object comprises a plurality of first image parts and a second image of the object comprises a plurality of second image parts. The plurality of mirrors have to be arranged in an electromagnetic radiation path between the object and the image acquisition unit in such a manner that electromagnetic radiation path lengths assigned to different ones of the first image parts differ from one another by not more than the depth of focus of the image acquisition unit, and that electromagnetic radiation path lengths between the different ones of the second image parts differ not by more than the depth of focus of the image acquisition unit from one another.

The method comprises the same advantages as the apparatus as described above. Furthermore, any of the embodiments described for the apparatus may also be applied to the method, and vice versa.

According to yet another exemplary embodiment of the invention, a computer-readable medium (for instance a CD, a DVD, a USB stick, a floppy disk or a harddisk) is provided, in which a computer program is stored which, when being executed by a processor (such as a microprocessor or a CPU), is adapted to control or carry out a method having the above mentioned features.

According to still another exemplary embodiment of the invention, a program element (for instance a software routine, in source code or in executable code) is provided, which, when being executed by a processor (such as a microprocessor or a CPU), is adapted to control or carry out a method having the above mentioned features.

Signal processing which may be performed according to embodiments of the invention can be realized by a computer program, that is by software, or by using one or more special electronic optimization circuits, that is in hardware, or in hybrid form, that is by means of software components and hardware components.

The aspects defined above and further aspects of the present invention are apparent from the examples of embodiment to be described hereinafter and are explained with reference to the examples of embodiment.

### Brief Description of the Drawings

In the following, a detailed description of the invention should be given by referring to the figures as attached.
Fig. 1 shows schematically electromagnetic radiation paths from an object to an image acquisition unit of an apparatus for analyzing the object according to an exemplary embodiment of the invention.
Fig. 2 shows a mechanical arrangement of an object, a plurality of mirrors and a thermal activation unit of an apparatus for analyzing an object according to an exemplary embodiment of the invention.
Fig. 3 shows image parts of first and second images together with a temperature scale in degrees Celsius.
Fig. 4A shows image parts of first or second images as they are projected onto an image acquisition unit.
Fig. 4B shows image parts of the first or second images of Fig. 4A after one part image has been flipped up and down in order to give all part images the same orientation.
Fig. 5 shows image parts obtained during performing a differential analysis of images of an object before and after passing a thermal activation unit according to an exemplary embodiment of the invention.

### Detailed description

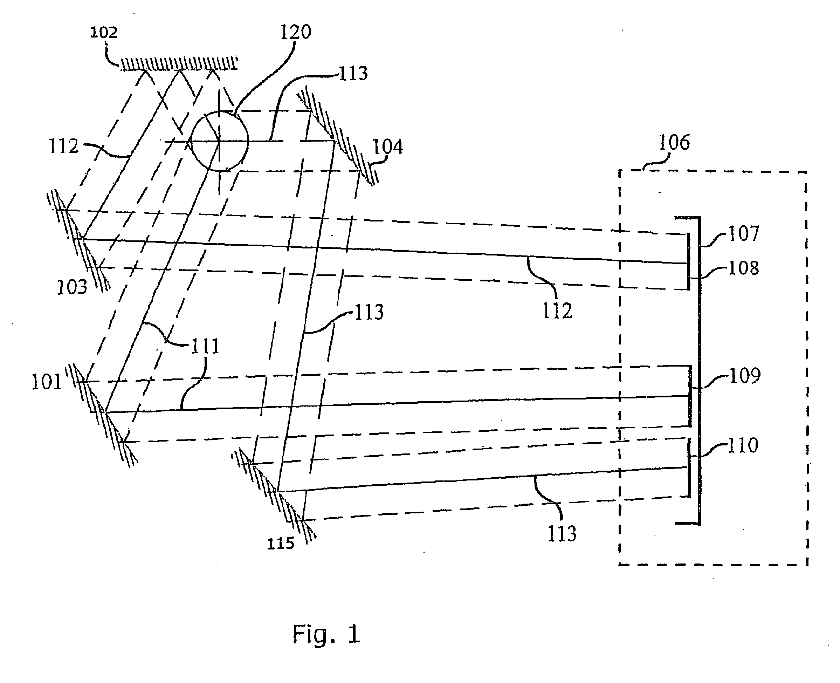

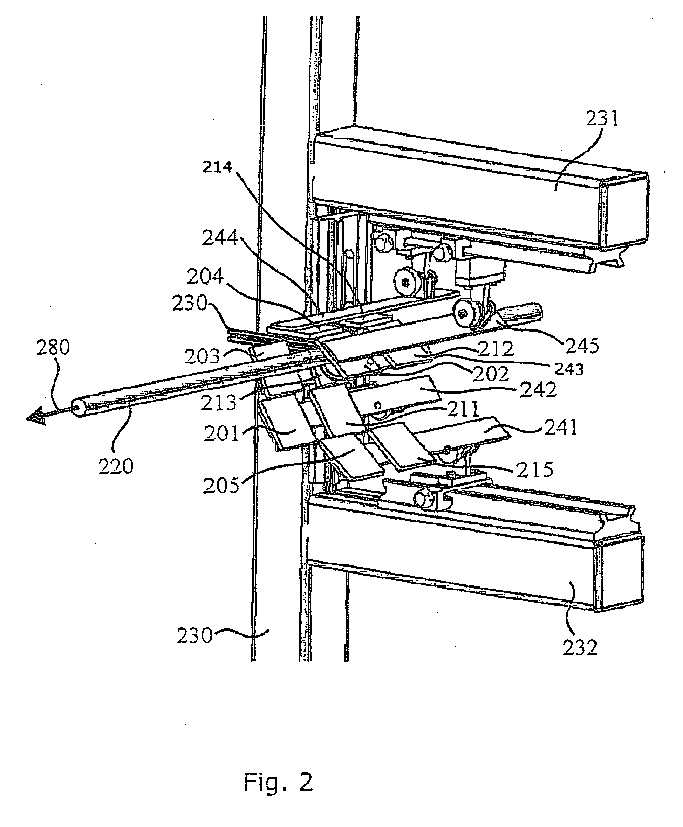

Before, referring to Fig. 2, an apparatus for analyzing an object according to an exemplary embodiment of the invention will be explained in detail, a geometry between various components of such an apparatus will be explained referring to Fig. 1.

**Fig. 1** shows an object 120 together with five mirrors 101, 102, 103, 104, 105 and corresponding electromagnetic radiation paths 111, 112, 113. Electromagnetic radiation, particularly infrared light, may propagate from a surface of the object 120, may be reflected by the mirrors 101, 102, 103, 104, 105 and may impinge onto different portions of an infrared sensitive surface of an image acquisition unit 106. Three different surface portions of the object 102 may therefore be mapped onto three different sensor portions 108 to 110 of the image acquisition unit 106. Each of the three electromagnetic radiation paths 111, 112, 113 relates to a respective circumferential surface portion (of about 120°, for instance an angle in a range between 110° and 130°) of the object 120. Thus, when taking in combination, the images acquired by the three different sensor portions 108 to 110 represent information regarding the entire circumferential surface of the object 120.

The circle that is used as equivalent for the object 120 is a cross-section of a wire or post. In addition, the image acquisition unit 106 as well as a sensor region 107 thereof for detecting infrared radiation as well as partial images 108, 109, 110 indicative of different surface portions of the objet 120 are shown. The longitudinal axis of the object 120-is in Fig. 1 perpendicular to the paper plane of Fig. 1. The arrangement of the object 120, the mirrors 101, 102, 103, 104, 105, the image acquisition unit 106 as well as the sensor 107 which is preferably a two-dimensional sensor, are arranged such that the electromagnetic path lengths 111, 112, 113 are within the depth of focus of the image acquisition unit 106. The depth of focus of an infrared digital camera may be in the range of 1 cm to 2 cm. Alternatively, the arrangement can also be such that the optical paths 111, 112, 113 are all equal in length. -

The five mirrors 101, 102, 103, 104, 105 as shown in Fig. 1 can deliver three image parts 108 to 110 each representing about 120° of the circumference of the object 120 to the image acquisition unit 106. Fig. 1 shows the arrangement for capturing a complete circumferential image in three part images for example before the object 120 passes a thermal activation unit (not shown in Fig. 1) where the object 120 is heated for instance by eddy currents induced in the object 120 when the object 120 passes through an activated induction coil (not shown in Fig. 1). A similar set-up of mirrors can be arranged after or behind the thermal activation unit. This gives in total ten mirrors, five before and five after the thermal activation unit so that a complete image of the object 120 before and after being thermally activated may be obtained. However, both groups of mirrors are arranged such that only one image acquisition unit 106 is sufficient for capturing an image of the object 120 before and after being thermally activated.

Defects in the object 120 may be made visible in an infrared image after thermal activation of the object 120. By capturing an image of the object 120 before and after thermal activation and by calculating a difference image before and after thermal activation, the technical quality of the object 120 may be analyzed by inspection of the difference image. Defects may be made visible by the thermal activation, and image artefacts may be suppressed or eliminated by the image difference calculation.

As shown in Fig. 1, each part image 108 to 110 represents more than 120° of the complete circular circumference of the object 120. This means also that there is an overlap between the partial images 108 to 110 because the mirrors 101 to 105 are arranged around the circumference of the object 120 to reflect the surface of the object 120. It is also possible that there is not a round object 120 arranged between the mirrors 101 to 105 but an object with a rectangular or triangular or any other shape. In some cases it might make sense to not arrange only five mirrors 101 to 105 as shown in Fig. 1 to represent each about 120° of the circumference of the object 120 but seven or more mirrors so that each of, for instance, four partial images each represent about 90° of the circumference of the object 120.

It is also not necessary to have only one mirror in the electromagnetic path 111 (in contrast to two mirrors in the electromagnetic paths 112 and 113). It is also possible to have two mirrors in this electromagnetic radiation path 111 as well. The advantage would be that the image with the most direct way between the object 120 and the image acquisition unit 106 is not right-left reversed compared to the other part images in case five mirrors are used. However, the arrangement of Fig. 1 has the advantage that a small number of five mirrors is sufficient to monitor the overall surface of the object 120. It is also possible to arrange an even higher number of mirrors around the object 120 of variable size ensuring that each of the optical paths length between the object 120 and the image acquisition unit 106 is within the depth of focus (DOF) of the image acquisition unit 106 or completely equal in length, within tolerances.

**Fig.2** shows an apparatus for analyzing an object 220 according to an exemplary embodiment of the invention.

Fig. 2 shows a three-dimensional arrangement of two sets of five mirrors each with a mechanical carrier 230, 231, 232 and the object 220. A first set of mirrors consists of mirrors 201, 202, 203, 204 and 205, and a second set of mirrors consists of the mirrors 211, 212, 213, 214, 215. The longitudinal axis of the object 120, a long wire or post, is parallel to the reflection planes of the plurality of mirrors 201 to 205, 211 to 215. It can also be recognized that the corresponding mirrors of the first set of mirrors 201, 202, 203, 204, 205 and the second set of mirrors 211, 212, 213, 214, 215 are arranged on common carriers 241, 242, 243, 244, 245. However, common carriers are not required. These mirror carriers 241, 242, 243, 244, 245 are attached to the stationary carriers 230, 231, 232. Between the first set of mirrors 201, 202, 203, 204, 205 and the second set of mirrors 211, 212, 213, 214, 215 (in a motion direction of the wire 220) an induction coil 230 is arranged. The induction coil 230 is used as a thermal activation unit for heating the object 220 when the object 220 is guided through the induction coil 230.

The image acquisition unit 106 is not shown in Fig. 2 but may be arranged in a similar manner as explained referring to Fig. 1. The image acquisition unit 106 may capture an image of a longitudinal portion of the wire 220 before and after having passed the induction coil 230. By means of the mirrors 201 to 205, different circumferential surface portions of the wire 220 may be captured after being heated by the induction coil 230. By means of the mirrors 211 to 215, different circumferential surface portions of the wire 220 may be captured before being heated by the induction coil 230.

Apart from the moved object 220 (moving direction indicated by reference numeral 280) all other parts shown in Fig. 2 have a fixed position to each other. The object 220 can be moved through the induction coil 230 along the longitudinal axis of the object 220. Alternatively to the induction coil 230 to - which typically an RF-generator (not shown) is connected for powering the induction coil 230, one or more lasers or one or more tungsten lamps can be used to heat the object 220 between the first set of mirrors 201, 202, 203, 204, 205 and the second set of mirrors 211, 212, 213, 214, 215. Other heating sources are possible.

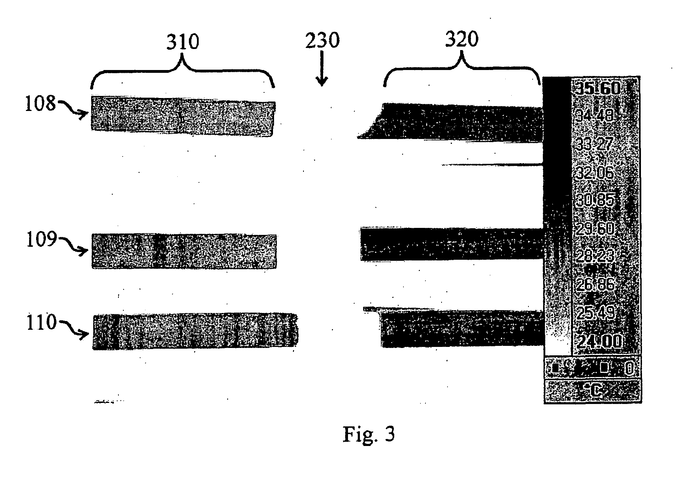

**Fig. 3** illustrates an image captured by an infrared camera 106 of different longitudinally spaced sections of the wire 220 before passing an induction coil 230 (see image portion 310) and after having passed an induction coil 230 (see image portion 320). Due to the inductive heating of the wire 220, the entire image 320 is brighter as compared to the entire image 310. Moreover, as-indicated by an arrow in Fig. 3, a defect of the wire 220 has become visible by the heating. The three individual image sub-portions 108 to 110 for each of the images 310, 320 are shown as well in Fig. 3.

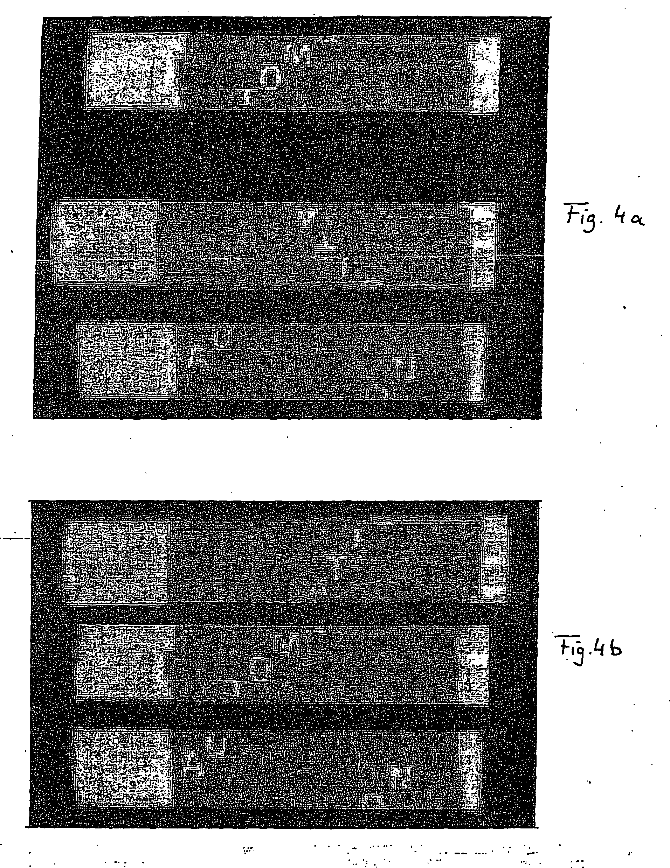

Thus, six partial images can be recognized in Fig. 3. The left set of three part images 310 are taken before the moving wire 220 has passed through the thermal activation unit 230, i.e. the induction coil 230. The three right part images 320 represent another segment of the wire 220 after it has moved through the thermal activation unit 230. The scale on the very right side of Fig. 3 shows the temperature distribution being between 24°C and about 35°C in gray shades. From the three right part images 320, a thermal gradient from the left side of this set of part images to the right side of this set of part images has been eliminated by using the processing capabilities of a control unit. The control unit may also flip up and down the middle part picture (compare also Fig. 4A and Fig. 4B).

By electronically calculating the difference of intensities between corresponding image parts of the left side of Fig. 3 representing three part images or a segment before thermal activation and three part images on the right side of Fig. 3 representing an identical segment of the moving object of the other side of the thermal activation unit, it is possible to detect possible quality problems or imperfections such as cracks or flaws within the object. The small arrow on the lower right part image shows a longitudinal crack represented by an additional heated zone of additional 3°C.

The differential picture may be calculated using the following procedure:

The image acquisition unit 106 captures two sets of part images representing the first image and the second image, respectively, of the object 220 before and after passing the thermal activation unit 230, i.e. an induction coil. In these areas, the picture of the wire 230 is detected automatically and may be flipped to a horizontal orientation, if required, to compensate for vibration artifacts. This may be required because the wire 220 normally vibrates if it is moving with a speed of about 1.5 m/s through the thermal activation unit 230.

Next, a temperature gradient in a direction towards the and away from the thermal activation unit may be eliminated.

Next, corresponding part images before and after the thermal activation unit 230 may be stitched together. Each of the first and the second image represents a 360° circumference around the object 220.

Next, the difference between the two panoramic pictures may be calculated taking into account the movement of the object. The speed of the object may be measured by a speed measurement unit, for instance a speed measurement wheel. This measurement wheel may generate signals indicative of the speed of the moving wire. These signals may be sent to a control unit and may be used for the calculation. If the image acquisition unit 106 is able to take about 150 to 250 images per second and the object 220 moves with a speed of about 1.5 m/s, the wire 220 is moved about 10 mm between two subsequent images taken.

In a final step, inhomogeneous areas such as cracks or flaws may be detected visually or using image recognition methods. They may be detectable by a locally hotter or colder area compared to the surrounding in a differential image. With this technique, flaws or cracks with an orientation of up to 45° or more can be detected.

The partial images 108 to 110 of the image portion 310 differ regarding a length of an optical path between object surface and camera surface by less than a depth of focus of the camera. The partial images 108 to 110 of the image portion 320 differ from one another regarding a length of an optical path between object surface and camera surface by less than a depth of focus of the camera. This ensures that an error analysis along the entire circumference of the object is nearly the same. Furthermore, a length of an optical path between object surface and camera surface of corresponding images 108 of the image portion 310 and the image portion 320, as well as corresponding images 109 of the image portion 310 and the image portion 320 and corresponding images 110 of the image portion 310 and the image portion 320 are (pairwise) the same. This allows for an accurate calculation of difference images between images 108 of the image portion 310 and the image portion 320, between images 109 of the image portion 310 and the image portion 320, and between images 110 of the image portion 310 and the image portion 320.

**Fig. 4A** and **Fig. 4B** represent images obtained at different stages of the calculation steps taken by the control unit.

Fig. 4A represents three part images of the first or the second image. It can easily be detected that the middle one of the three part images of Fig. 4A is flipped up and down.

After the control unit has flipped the middle part image - as shown in Fig. 4B - the letters "TOM" are represented in the right orientation so that all three partial pictures if taken together are showing the word "AUTOMATION" printed on the circumference of the wire.

Fig. 4A and Fig. 4B shows that the mapping of the surface of the wire onto the camera is complete and without interruptions. In other words, all (three) sides of the wire are visible without gaps in between. This ensures that all defects along the entire circumference are detectable.

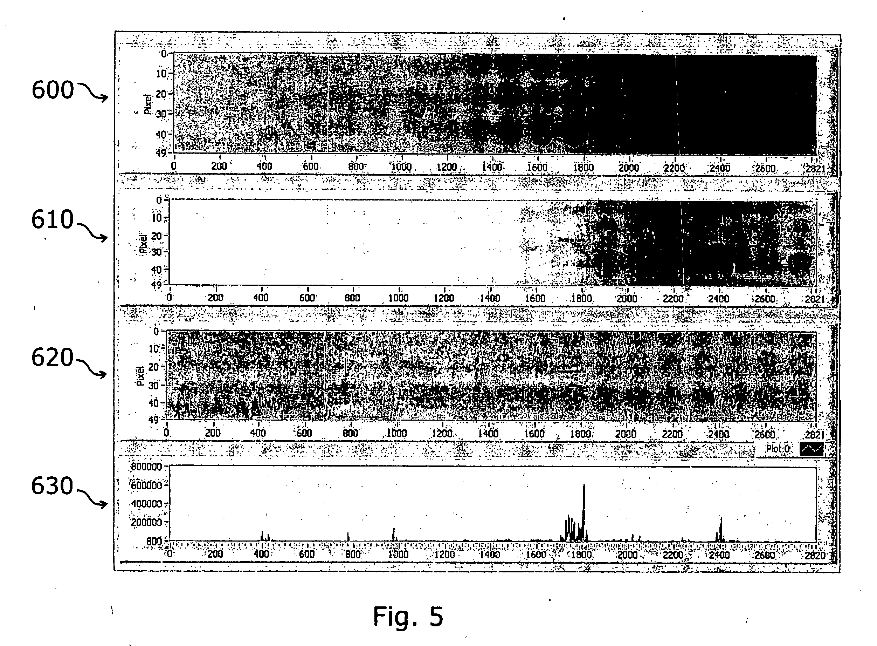

**Fig. 5** shows image parts obtained during performing a differential analysis according to an exemplary embodiment of the invention.

Image 600 illustrates a panorama image of a wire captured after having passed an induction coil. Image 610 illustrates a panorama image of the wire captured before passing the induction coil. Image 620 is a difference of images 600 and 610. Image 630 is an error indicator allowing to quickly detect defects, such at a position between 1700 and 1800.

In the images 600, 610, 620, 630 shown in Fig. 5, multiple individual image sections of wire portions have been stitched together in a longitudinal direction.

## Claims

1. An apparatus for analyzing an object (120, 220) with a longitudinal axis, the apparatus comprising
a thermal activation unit (230) adapted for thermally activating the object (120, 220);
an image acquisition unit (106) having a depth of focus and being adapted for acquiring a first image of the object (120, 220) before thermal activation, and for acquiring a second image of the object (120, 220) after thermal activation,
the first image of the object (120, 220) comprising a plurality of first image parts (108, 109, 110), and the second image of the object (120, 220) comprising a plurality of second image parts; and
a plurality of mirrors (101 to 105; 201 to 205, 211 to 215) arranged in an electromagnetic radiation path (111, 112, 113) between the object (120, 220) and the image acquisition unit (106) in such a manner that electromagnetic radiation path lengths (111, 112, 113) assigned to different ones of the first image parts (108, 109, 110) differ by not more than the depth of focus from one another and that electromagnetic radiation path lengths assigned to different ones of the second image parts differ by not more than the depth of focus from one another,
wherein the plurality of mirrors (101 to 105; 201 to 205, 211 to 215) is arranged such that a complete 360° view around the object (120, 220) is reflected to the image acquisition unit (106) via the plurality of mirrors (101 to 105; 201 to 205, 211 to 215)
**characterised in that**:
each of the plurality of first image parts (108, 109, 110) of the first image differ from one another regarding the electromagnetic radiation path length (111, 112, 113) between object surface and surface of the image acquisition unit (106) by less than the depth of focus of the image acquisition unit (106), and
each of the plurality of second image parts of the second image differ from one another regarding the electromagnetic radiation path length between object surface and surface of the image acquisition unit (106) by less than the depth of focus of the image acquisition unit (106).

2. Apparatus according to claim 1, comprising an object moving unit adapted for moving the object (120, 220) relative to the plurality of mirrors (101 to 105; 201 to 205, 211 to 215) and the image acquisition unit (106).

3. Apparatus according to any of the preceding claims, wherein reflexion planes of the plurality of mirrors (101 to 105; 201 to 205, 211 to 215) are arranged to be parallel to the longitudinal axis of the object (120, 220).

4. Apparatus according to any of the preceding claims, wherein the plurality of mirrors (101 to 105; 201 to 205, 211 to 215) are arranged such that the first image and the second image include information indicative of a surface condition of the object (120, 220) along an entire circumference of the object (120, 220).

5. Apparatus according to any of the preceding claims, further comprising a control unit adapted for determining a quality-related property of the object (120, 220) based on a correlation, particularly based on a difference, between the first image and the second image.

6. Apparatus according to claim 5, wherein the quality-related property of the object (120, 220) is indicative of a structural defect of the object (120, 220), particularly is indicative of flaws or cracks in a surface-near portion of the object (120, 220).

7. Apparatus according to any of the preceding claims, wherein the image acquisition unit (106) has an image sensitive sensor region (107) arranged in such a manner relative to the plurality of mirrors (101 to 105; 201 to 205, 211 to 215) that the plurality of first image parts and the plurality of second image parts are projected simultaneously onto different portions of the sensor region.

8. Apparatus according to claim 5 or any of the preceding claims , wherein the control unit is adapted to stitch together image parts relating to different longitudinal portions of the object (120, 220) before thermal activation and to stitch together image parts relating to different longitudinal portions of the object (120, 220) after thermal activation.

9. Apparatus according to any of the preceding claims, wherein the plurality of mirrors (101 to 105; 201 to 205, 211 to 215) is arranged in an electromagnetic radiation path (111, 112, 113) between the object (120, 220) and the image acquisition unit (106) in such a manner that electromagnetic radiation path lengths assigned to different ones of the first image parts (108, 109, 110) are the same and that electromagnetic radiation path lengths assigned to different ones of the second image parts are the same.

10. Apparatus according to any of the preceding claims, comprising at least one of the following features:
the plurality of mirrors (101 to 105; 201 to 205, 211 to 215) comprise at least ten mirrors, particularly consist of exactly ten mirrors, more particularly consist of exactly five mirrors arranged before thermal activation and of exactly five mirrors arranged after thermal activation;
the thermal activation unit (230) comprises one of the group consisting of an induction coil (230), a laser, and a tungsten lamp;
the apparatus further comprises a speed sensor adapted to measure a speed of the object (120, 220) relative to the plurality of mirrors (101 to 105; 201 to 205, 211 to 215) and the image acquisition unit (106);
the image acquisition unit (106) comprises an infrared camera, particularly consists of exactly one infrared camera.

11. Apparatus according to any of the preceding claims, wherein the plurality of mirrors (101 to 105; 201 to 205, 211 to 215) is arranged in an electromagnetic radiation path (111, 112, 113) between the object (120, 220) and the image acquisition unit (106) in such a manner that electromagnetic radiation path lengths assigned to pairs of one of the first image parts (108, 109, 110) and one of the second image parts and relating to the same surface portion of the object (120, 220) are the same.

12. Apparatus according to any of the preceding claims, wherein the apparatus is adapted to compensate for a temperature gradient in the first and second image resulting from different distances of different image portions in the first and second image from the thermal activation unit (106).

13. A method of analyzing an object (120, 220), the method comprising
thermally activating the object (120, 220);
acquiring a first image of the object (120, 220) before thermal activation, and acquiring a second image of the object (120, 220) after thermal activation using an image acquisition unit (106) having a depth of focus,
the first image of the object (120, 220) comprising a plurality of first image parts (108, 109, 110) and the second image of the object (120, 220) comprising a plurality of second image parts; and
arranging a plurality of mirrors (101 to 105; 201 to 205, 211 to 215) in an electromagnetic radiation path (111, 112, 113) between the object (120, 220) and the image acquisition unit (106) in such a manner that electromagnetic radiation path lengths (111, 112, 113) assigned to different ones of the first image parts differ from one another by not more than the depth of focus and that electromagnetic radiation path lengths assigned to different ones of the second image parts differ by not more than the depth of focus from one another,
wherein the plurality of mirrors (101 to 105; 201 to 205, 211 to 215) is arranged such that a complete 360° view around the object (120, 220) is reflected to the image acquisition unit (106) via the plurality of mirrors (101 to 105; 201 to 205, 211 to 215),
**characterised in that**:
each of the plurality of first image parts (108, 109, 110) of the first image differ from one another regarding the electromagnetic radiation path length (111, 112, 113) between object surface and surface of the image acquisition unit (106) by less than the depth of focus of the image acquisition unit (106), and
each of the plurality of second image parts of the second image differ from one another regarding the electromagnetic radiation path length between object surface and surface of the image acquisition unit (106) by less than the depth of focus of the image acquisition unit (106).

14. Method according to claim 13, wherein the method is controlled by a processor executing a computer program of analyzing the object (120, 220), the computer program being stored on a computer-readable medium.

15. Method according to claim 13, wherein the method is controlled by a processor executing a program element of analyzing the object (120, 220).

## Patentansprüche

1. Eine Vorrichtung zum Analysieren eines Objekts (120, 220) mit einer Längsachse, wobei die Vorrichtung aufweist
eine thermische Aktivierungseinheit (230), die geeignet ist, das Objekt (120, 220) thermisch zu aktivieren;
eine Bilderfassungseinheit (106), die eine Schärfentiefe aufweist und die geeignet ist, ein erstes Bild des Objekts (120, 220) vor der thermischen Aktivierung zu erfassen, und ein zweites Bild des Objekts (120, 220) nach der thermischen Aktivierung zu erfassen,
wobei das erste Bild des Objekts (120, 220) eine Mehrzahl von ersten Bildteilen (108, 109, 110) aufweist, und wobei das zweite Bild des Objekts (120, 220) eine Mehrzahl von zweiten Bildteilen aufweist; und
eine Mehrzahl von Spiegeln (101 bis 105; 201 bis 205, 211 bis 215), die in einem elektromagnetischen Strahlungspfad (111, 112, 113) zwischen dem Objekt (120, 220) und der Bilderfassungseinheit (106) in solch einer Weise angeordnet ist, dass elektromagnetische Strahlungspfadlängen (111, 112, 113), die unterschiedlichen der ersten Bildteile (108, 109, 110) zugeordnet sind, sich um nicht mehr als die Schärfentiefe voneinander unterscheiden und dass elektromagnetische Strahlungspfadlängen, die unterschiedlichen der zweiten Bildteile zugeordnet sind, sich um nicht mehr als die Schärfentiefe voneinander unterscheiden,
wobei die Mehrzahl der Spiegel (101 bis 105; 201 bis 205, 211 bis 215) so angeordnet ist, dass ein vollständiger 360°-Blick um das Objekt (120, 220) auf die Bilderfassungseinheit (106) über die Mehrzahl von Spiegeln (101 bis 105; 201 bis 205, 211 bis 215) reflektiert wird,
**dadurch gekennzeichnet, dass**:
sich jedes der Mehrzahl von ersten Bildteilen (108, 109, 110) des ersten Bilds voneinander bezüglich der elektromagnetischen Strahlungspfadlänge (111, 112, 113) zwischen Objektoberfläche und Oberfläche der Bilderfassungseinheit (106) um weniger als die Schärfentiefe der Bilderfassungseinheit (106) unterscheiden, und
sich jedes der Mehrzahl von zweiten Bildteilen des zweiten Bilds voneinander bezüglich der elektromagnetischen Strahlungspfadlänge zwischen Objektoberfläche und Oberfläche der Bilderfassungseinheit (106) um weniger als die Schärfentiefe der Bilderfassungseinheit (106) unterscheiden.

2. Vorrichtung gemäß Anspruch 1, aufweisend eine Objektbewegungseinheit, die geeignet ist, das Objekt (120, 220) relativ zu der Mehrzahl von Spiegeln (101 bis 105; 201 bis 205, 211 bis 215) und der Bilderfassungseinheit (106) zu bewegen.

3. Vorrichtung gemäß einem der vorhergehenden Ansprüche, wobei Reflexionsebenen der Mehrzahl von Spiegeln (101 bis 105; 201 bis 205, 211 bis 215) angeordnet sind, um parallel zu der Längsachse des Objekts (120, 220) zu sein.

4. Vorrichtung gemäß einem der vorhergehenden Ansprüche, wobei die Mehrzahl von Spiegeln (101 bis 105; 201 bis 205, 211 bis 215)so angeordnet ist, dass das erste Bild und das zweite Bild Informationen aufweisen, die indikativ für eine Oberflächenbedingung des Objekts (120, 220) entlang eines vollständigen Umfangs des Objekts (120, 220) sind.

5. Vorrichtung gemäß einem der vorhergehenden Ansprüche, weiterhin aufweisend eine Steuereinheit, die geeignet ist, um eine qualitätsbezogene Eigenschaft des Objekts (120, 220) basierend auf einer Korrelation, insbesondere basierend auf einem Unterschied, zwischen dem ersten Bild und dem zweiten Bild zu bestimmen.

6. Vorrichtung gemäß Anspruch 5, wobei die qualitätsbezogenen Eigenschaft des Objekts (120, 220) indikativ für einen strukturellen Defekt des Objekts (120, 220) ist, insbesondere indikativ für Sprünge oder Risse in einem oberflächennahen Teilbereich des Objekts (120, 220) ist.

7. Vorrichtung gemäß einem der vorhergehenden Ansprüche, wobei die Bilderfassungseinheit (106) einen bildempfindlichen Sensorbereich (107) aufweist, der in solch einer Weise relativ zu der Mehrzahl von Spiegeln (101 bis 105; 201 bis 205, 211 bis 215) angeordnet ist, dass die Mehrzahl der ersten Bildteile und die Mehrzahl der zweiten Bildteile gleichzeitig auf unterschiedliche Teilbereiche des Sensorbereichs projiziert werden.

8. Vorrichtung gemäß Anspruch 5 oder einem der vorhergehenden Ansprüche, wobei die Steuereinheit geeignet ist, um Bildteile, die sich auf unterschiedliche Längsteilbereiche des Objekts (120, 220) vor der thermischen Aktivierung beziehen, zusammenzufügen, und um Bildteile, die sich auf unterschiedliche Längsteilbereiche des Objekts (120, 220) nach der thermischen Aktivierung beziehen, zusammenzufügen.

9. Vorrichtung gemäß einem der vorhergehenden Ansprüche, wobei die Mehrzahl von Spiegeln (101 bis 105; 201 bis 205, 211 bis 215) in einem elektromagnetischen Strahlungspfad (111, 112, 113) zwischen dem Objekt (120, 220) und der Bilderfassungseinheit (106) in solch einer Weise angeordnet ist, dass elektromagnetische Strahlungspfadlängen, die unterschiedlichen der ersten Bildteile (108, 109, 110) zugeordnet sind, die gleichen sind, und dass elektromagnetische Strahlungspfadlängen, die unterschiedlichen der zweiten Bildteile zugeordnet sind, die gleichen sind.

10. Vorrichtung gemäß einem der vorhergehenden Ansprüche, aufweisend zumindest eines der folgenden Merkmale:
die Mehrzahl von Spiegeln (101 bis 105; 201 bis 205, 211 bis 215) weist zumindest zehn Spiegel auf, besteht insbesondere aus exakt zehn Spiegeln, besteht vor allem insbesondere aus exakt fünf Spiegeln, die vor der thermischen Aktivierung angeordnet sind, und aus exakt fünf Spiegeln, die nach der thermischen Aktivierung angeordnet sind;
die thermische Aktivierungseinheit (230) weist eines aus der Gruppe bestehend aus einer Induktionsspule (230), einem Laser, und einer Wolframlampe auf;
die Vorrichtung weist des Weiteren einen Geschwindigkeitssensor auf, der geeignet ist, eine Geschwindigkeit des Objekts (120, 220) relativ zu der Mehrzahl von Spiegeln (101 bis 105; 201 bis 205, 211 bis 215) und der Bilderfassungseinheit (106) zu messen;
die Bilderfassungseinheit (1β6) weist eine Infrarotkamera auf, besteht insbesondere aus exakt einer Infrarotkamera.

11. Vorrichtung gemäß einem der vorhergehenden Ansprüche, wobei die Mehrzahl von Spiegeln (101 bis 105; 201 bis 205, 211 bis 215) in einem elektromagnetischen Strahlungspfad (111, 112, 113) zwischen dem Objekt (120, 220) und der Bilderfassungseinheit (106) in solch einer Weise angeordnet ist, dass elektromagnetische Strahlungspfadlängen, die Paaren von einem der ersten Bildteile (108, 109, 110) und einem der zweiten Bildteile zugeordnet sind und sich auf denselben Oberflächenteilbereich des Objekts (120, 220) beziehen, die gleichen sind.

12. Vorrichtung gemäß einem der vorhergehenden Ansprüche, wobei die Vorrichtung geeignet ist, einen Temperaturgradienten in dem ersten und dem zweiten Bild, der aus unterschiedlichen Distanzen von unterschiedlichen Bildteilbereichen in dem ersten und dem zweiten Bild aus der thermischen Aktivierungseinheit (106) resultiert, zu kompensieren.

13. Ein Verfahren zum Analysieren eines Objekts (120, 220), wobei das Verfahren aufweist
thermisches Aktivieren des Objekts (120, 220);
Erfassen eines ersten Bilds des Objekts (120, 220) vor der thermischen Aktivierung, und Erfassen eines zweiten Bilds des Objekts (120, 220) nach der thermischen Aktivierung unter Verwendung einer Bilderfassungseinheit (106), die eine Schärfentiefe aufweist,
wobei das erste Bild des Objekts (120, 220) eine Mehrzahl von ersten Bildteilen (108, 109, 110) aufweist, und wobei das zweite Bild des Objekts (120, 220) eine Mehrzahl von zweiten Bildteilen aufweist; und
Anordnen einer Mehrzahl von Spiegeln (101 bis 105; 201 bis 205, 211 bis 215) in einem elektromagnetischen Strahlungspfad (111, 112, 113) zwischen dem Objekt (120, 220) und der Bilderfassungseinheit (106) in solch einer Weise, dass elektromagnetische Strahlungspfadlängen (111, 112, 113), die unterschiedlichen der ersten Bildteile (108, 109, 110) zugeordnet sind, sich um nicht mehr als die Schärfentiefe voneinander unterscheiden und dass elektromagnetische Strahlungspfadlängen, die unterschiedlichen der zweiten Bildteile zugeordnet sind, sich um nicht mehr als die Schärfentiefe voneinander unterscheiden,
wobei die Mehrzahl der Spiegel (101 bis 105; 201 bis 205, 211 bis 215) so angeordnet ist, dass ein vollständiger 360°-Blick um das Objekt (120, 220) auf die Bilderfassungseinheit (106) über die Mehrzahl von Spiegeln (101 bis 105; 201 bis 205, 211 bis 215) reflektiert wird,
**dadurch gekennzeichnet, dass**:
sich jedes der Mehrzahl von ersten Bildteilen (108, 109, 110) des ersten Bilds voneinander bezüglich der elektromagnetischen Strahlungspfadlänge (111, 112, 113) zwischen Objektoberfläche und Oberfläche der Bilderfassungseinheit (106) um weniger als die Schärfentiefe der Bilderfassungseinheit (106) unterscheiden, und
sich jedes der Mehrzahl von zweiten Bildteilen des zweiten Bilds voneinander bezüglich der elektromagnetischen Strahlungspfadlänge zwischen Objektoberfläche und Oberfläche der Bilderfassungseinheit (106) um weniger als die Schärfentiefe der Bilderfassungseinheit (106) unterscheiden.

14. Verfahren gemäß Anspruch 13, wobei das Verfahren durch einen Prozessor gesteuert wird, der ein Computerprogramm des Analysierens des Objekts (120, 220) ausführt, wobei das Computerprogramm auf einem computerlesbaren Medium gespeichert ist.

15. Verfahren gemäß Anspruch 13, wobei das Verfahren durch einen Prozessor gesteuert wird, der ein Programmelement des Analysierens des Objekts (120, 220) ausführt.

## Revendications

1. Dispositif pour analyser un objet (120, 220) avec un axe longitudinal, le dispositif comprenant
une unité d'activation thermique (230) adaptée pour activer thermiquement l'objet (120, 220) ;
une unité d'acquisition d'image (106) ayant une profondeur de champ et étant adaptée pour acquérir une première image de l'objet (120, 220) avant l'activation thermique et pour acquérir une deuxième image de l'objet (120, 220) après l'activation thermique,
la première image de l'objet (120, 220) comprenant une pluralité de parties de première image (108, 109, 110) et la deuxième image de l'objet (120, 220) comprenant une pluralité de parties de deuxième image ; et
une pluralité de miroirs (101 à 105 ; 201 à 205, 211 à 215) agencée dans un chemin de rayonnement électromagnétique (111, 112, 113) entre l'objet (120, 220) et l'unité d'acquisition d'image (106) de telle manière que des longueurs de chemin de rayonnement électromagnétique (111, 112, 113) assignées à des parties différentes des parties de première image (108, 109, 110) ne diffèrent pas l'une de l'autre de plus que la profondeur de champ et que des longueurs de chemin de rayonnement électromagnétique assignées à des parties différentes des parties de deuxième image ne diffèrent pas l'une de l'autre de plus que la profondeur de champ,
dans lequel la pluralité de miroirs (101 à 105 ; 201 à 205, 211 à 215) est agencée de sorte qu'une vue complète à 360° autour de l'objet (120, 220) soit réfléchie sur l'unité d'acquisition d'image (106) via la pluralité de miroirs (101 à 105 ; 201 à 205, 211 à 215),
**caractérisé en ce que** chacune de la pluralité de parties de première image (108, 109, 110) de la première image diffère des autres relativement à la longueur de chemin de rayonnement électromagnétique (111, 112, 113) entre une surface de l'objet et une surface de l'unité d'acquisition d'image (106) de moins que la profondeur de champ de l'unité d'acquisition d'image (106), et
chacune de la pluralité de parties de deuxième image de la deuxième image diffère des autres relativement à la longueur de chemin de rayonnement électromagnétique entre une surface de l'objet et une surface de l'unité d'acquisition d'image (106) de moins que la profondeur de champ de l'unité d'acquisition d'image (106).

2. Dispositif selon la revendication 1, comprenant une unité de déplacement d'objet adaptée pour déplacer l'objet (120, 220) par rapport à la pluralité de miroirs (101 à 105 ; 201 à 205, 211 à 215) et à l'unité d'acquisition d'image (106).

3. Dispositif selon l'une quelconque des revendications précédentes, dans lequel des plans de réflexion de la pluralité de miroirs (101 à 105 ; 201 à 205, 211 à 215) sont agencés pour être parallèles à l'axe longitudinal de l'objet (120, 220).

4. Dispositif selon l'une quelconque des revendications précédentes, dans lequel la pluralité de miroirs (101 à 105 ; 201 à 205, 211 à 215) est agencée de sorte que la première image et la deuxième image comprennent des informations indicatives d'une condition de surface de l'objet (120, 220) le long de toute la circonférence de l'objet (120, 220).

5. Dispositif selon l'une quelconque des revendications précédentes, comprenant en outre une unité de commande adaptée pour déterminer une propriété relative à la qualité de l'objet (120, 220) sur la base d'une corrélation, basée en particulier sur une différence, entre la première image et la deuxième image.

6. Dispositif selon la revendication 5, dans lequel la propriété relative à la qualité de l'objet (120, 220) est indicative d'un défaut de structure de l'objet (120, 220), est indicative en particulier de failles ou fissures dans une portion proche de la surface de l'objet (120, 220).

7. Dispositif selon l'une quelconque des revendications précédentes, dans lequel l'unité d'acquisition d'image (106) a une région de détection sensible à l'image (107) agencée de telle manière par rapport à la pluralité de miroirs (101 à 105 ; 201 à 205, 211 à 215) que la pluralité de parties de première image et la pluralité de parties de deuxième image soient projetées simultanément sur des portions différentes de la région de détection.

8. Dispositif selon la revendication 5 ou l'une quelconque des revendications précédentes, dans lequel l'unité de commande est adaptée pour lier ensemble des parties d'image relatives à différentes portions longitudinales de l'objet (120, 220) avant l'activation thermique et pour lier ensemble des parties d'image relatives à différentes portions longitudinales de l'objet (120, 220) après l'activation thermique.

9. Dispositif selon l'une quelconque des revendications précédentes, dans lequel la pluralité de miroirs (101 à 105 ; 201 à 205, 211 à 215) est agencée dans un chemin de rayonnement électromagnétique (111, 112, 113) entre l'objet (120, 220) et l'unité d'acquisition d'image (106) de telle manière que des longueurs de chemin de rayonnement électromagnétique assignées à des parties différentes des parties de première image (108, 109, 110) soient identiques et que des longueurs de chemin de rayonnement électromagnétique assignées à des parties différentes des parties de deuxième image soient identiques.

10. Dispositif selon l'une quelconque des revendications précédentes, comprenant au moins une des caractéristiques suivantes :
la pluralité de miroirs (101 à 105 ; 201 à 205, 211 à 215) comprend au moins dix miroirs, en particulier comprend exactement dix miroirs, plus particulièrement comprend exactement cinq miroirs agencés avant l'activation thermique et exactement cinq miroirs agencés après l'activation thermique ;
l'unité d'activation thermique (230) comprend l'un parmi le groupe constitué d'une bobine d'induction (230), d'un laser et d'une lampe au tungstène ;
le dispositif comprend en outre un capteur de vitesse adapté pour mesurer une vitesse de l'objet (120, 220) par rapport à la pluralité de miroirs (101 à 105 ; 201 à 205, 211 à 215) et à l'unité d'acquisition d'image (106) ;
l'unité d'acquisition d'image (106) comprend une caméra infrarouge, en particulier consiste exactement en une caméra infrarouge.

11. Dispositif selon l'une quelconque des revendications précédentes, dans lequel la pluralité de miroirs (101 à 105 ; 201 à 205, 211 à 215) est agencée dans un chemin de rayonnement électromagnétique (111, 112, 113) entre l'objet (120, 220) et l'unité d'acquisition d'image (106) de telle manière que des longueurs de chemin de rayonnement électromagnétique assignées à des paires d'une des parties de première image (108, 109, 110) et d'une des parties de deuxième image et relatives à la même portion de surface de l'objet (120, 220) soient les mêmes.

12. Dispositif selon l'une quelconque des revendications précédentes, dans lequel le dispositif est adapté pour compenser un gradient de température dans la première et la deuxième images découlant de distances différentes de différentes portions d'image dans la première et la deuxième images à l'unité d'activation thermique (106).

13. Procédé d'analyse d'un objet (120, 220), le procédé comprenant
l'activation thermique de l'objet (120, 220) ;
l'acquisition d'une première image de l'objet (120, 220) avant l'activation thermique et l'acquisition d'une deuxième image de l'objet (120, 220) après l'activation thermique en utilisant une unité d'acquisition d'image (106) ayant une profondeur de champ,
la première image de l'objet (120, 220) comprenant une pluralité de parties de première image (108, 109, 110) et la deuxième image de l'objet (120, 220) comprenant une pluralité de parties de deuxième image ; et
l'agencement d'une pluralité de miroirs (101 à 105 ; 201 à 205, 211 à 215) dans un chemin de rayonnement électromagnétique (111, 112, 113) entre l'objet (120, 220) et l'unité d'acquisition d'image (106) de telle manière que des longueurs de chemin de rayonnement électromagnétique (111, 112, 113) assignées à des parties différentes des parties de première image ne diffèrent pas l'une de l'autre de plus que la profondeur de champ et que des longueurs de chemin de rayonnement électromagnétique assignées à des parties différentes des parties de deuxième image ne diffèrent pas l'une de l'autre de plus que la profondeur de champ,
dans lequel la pluralité de miroirs (101 à 105 ; 201 à 205, 211 à 215) est agencée de sorte qu'une vue complète à 360° autour de l'objet (120, 220) soit réfléchie sur l'unité d'acquisition d'image (106) via la pluralité de miroirs (101 à 105 ; 201 à 205, 211 à 215),
**caractérisé en ce que** chacune de la pluralité de parties de première image (108, 109, 110) de la première image diffère des autres relativement à la longueur de chemin de rayonnement électromagnétique (111, 112, 113) entre une surface de l'objet et une surface de l'unité d'acquisition d'image (106) de moins que la profondeur de champ de l'unité d'acquisition d'image (106), et
chacune de la pluralité de parties de deuxième image de la deuxième image diffère des autres relativement à la longueur de chemin de rayonnement électromagnétique entre une surface de l'objet et une surface de l'unité d'acquisition d'image (106) de moins que la profondeur de champ de l'unité d'acquisition d'image (106).

14. Procédé selon la revendication 13, dans lequel le procédé est commandé par un processeur exécutant un programme d'ordinateur d'analyse de l'objet (120, 220), le programme d'ordinateur étant stocké sur un support lisible par ordinateur.

15. Procédé selon la revendication 13, dans lequel le procédé est commandé par un processeur exécutant un élément de programme d'analyse de l'objet (120, 220).
